# EUROPEAN PATENT SPECIFICATION

(11) **EP 1 452 615 B1**
(45) Date of publication and mention of the grant of the patent: **26.07.2006**
(21) Application number: 02790704.7
(22) Date of filing: 06.12.2002
(51) Int. Cl.: C22C 33/08, C22C 33/10, C21C 1/08, C21C 1/10, C21C 7/04, C21C 7/00

(54) **METHOD FOR REUSE OF STEEL SHEET SCRAP**
VERFAHREN ZUR WIEDERVERWENDUNG VON STAHLBLECHSCHROTT
PROCEDE DE REUTILISATION DE FERRAILLES DE TOLES D'ACIER

(30) Priority: 10.12.2001 JP 2001375823
(43) Date of publication of application: 01.09.2004
(73) Proprietor: Daihatsu Motor Co., Ltd., Ikeda-shi Oska 563-8651 (JP); Osaka Special Aloy Co., Ltd., Osaka-shi, Osaka 555-0041 (JP); Horie, Hiroshi, Morioka-shi, Iwate 020-0031 (JP)
(72) Inventor: HORIE, Hiroshi, Morioka-shi, Iwate 020-0031 (JP); KOWATA, Toshinori, Iwate-gun, Takizawa-mura, Iwate 020-0173 (JP); AIDA, Taira c/o DAIHATSU MOTOR CO., LTD., Ikeda-shi, Osaka 563-8651 (JP); MIYAWAKI, Shigeji OSAKA SPECIAL ALLOY CO., LTD., Osaka-shi, Osaka 555-0041 (JP); MIYAKE, Makoto OSAKA SPECIAL ALLOY CO., LTD., Katsuyama-shi, Fukui 911-0831 (JP)
(74) Representative: Schwabe - Sandmair - Marx
(86) International application number: PCT/JP2002/012814
(87) International publication number: WO 2003/050316

(56) References cited:
- JP-A- 8 188 812

## Description

### Technical Field

The present invention relates to a recycling method of a scrap steel plate and, more particularly, to a recycling method of a scrap steel plate including scrap of high-tensile steel plate.

### Background Art

In recent years, a high-tensile steel plate (high-tensile plate) has been increasingly employed for a shell body or a shell plate of an automotive vehicle, for the purpose of improvement in collision safety and weight saving of the vehicle.

On the other hand, scrap steel plates made when the steel plate of the automotive vehicle is pressed are generally used as main raw material of cast iron. In the collecting of the scrap steel plates, as a proportion of the scrap of high-tensile steel plate to an existing ordinary steel plate (mild steel plate) increases, the cast iron's properties reduce disadvantageously.

The high-tensile steel plate contains more manganese, phosphorous and chromium than the ordinary steel plate contains. On the other hand, the cast iron has an iron base and a graphite structure, so that when the content of manganese, phosphorous and chromium increases in the cast iron, the cast iron has a hard, brittle structure with cementite (Fe₃C), which is called chill, being mixed, around a thin-walled area thereof, thus causing the problem that the cast iron reduces in easiness for casting and in machinability and mechanical nature, so that the cast iron cannot be used for structural parts.

Due to this, it is necessary to take some measures in the collecting process, such as, for example, adding high-purity pig iron to the scrap steel plate to dilute the content of manganese, phosphorous and chromium, or separating the scrap of high-tensile steel plate from the scrap of ordinary steel plate.

However, the former measure of adding the high-purity pig iron to the scrap steel plate to dilute the content of manganese, phosphorous and chromium involves the trouble to buy the high-purity pig iron and add it to the scrap steel plate, thus causing cost increase inevitably.

The latter measure of separating the scrap of high-tensile steel plate from the scrap of ordinary steel plate when collecting scrap steels requires the facilities for separation and collection of the respective scrap steel plates, thus not only causing cost increase but also taking a lot of troublesome separation tasks and thus causing significant reduction in workability.

### Disclosure of the Invention

It is an object of the present invention to provide a recycling method of scrap steel plate that can use scrap steel plates including scrap of high-tensile steel plate to produce good quality of cast iron efficiently, while avoiding unnecessary cost increase.

A recycling method of scrap steel plate of the present invention comprises a batch collecting process of collecting together scrap of high-tensile steel plate and scrap of ordinary steel plate, melting the scrap steel plates collected, the hot metal containing not less than 0.7 weight% manganese, and preparing the hot metal so that the sulfur content is in the range of 0.02 to 0.2 weight% in the hot metal and adding rare earth metal or misch metal which is two times as much as the sulfur content to the hot metal.

According to this method, since the scrap of high-tensile steel plate and the scrap of ordinary steel plate can be collected together, the specific facilities and tasks for separation and collection of these scrap steel plates are necessary, thus achieving cost saving and improvement in workability.

On the other hand, when the scrap of high-tensile steel plate is collected together with the scrap of ordinary steel plate in a batch process, the content of manganese, phosphorous and chromium in hot metal increases. Not less than 0.7 weight% manganese is contained in the hot metal of the scrap steel plate obtained, then the hot metal is prepared so that a sulfur content is in the range of 0.02 to 0.2 weight% in the hot metal, and a rare earth metal or a misch metal which is two times as much as the sulfur is added to the hot metal. Then, a complex sulfide comprising manganese, and rare earth metal or misch metal is produced. The complex sulfide serves as an effective base for crystallization of graphite, promoting the crystallization of graphite and thus suppressing the chilling (production of cementite (Fe₃C)) at the solidification of the hot metal inexpensively without adding the high-purity pig iron. Therefore, the cast iron excellent in easiness for casting, machinability and mechanical nature and suitably useable for structural parts can be produced easily. Further, since the cast iron thus produced is improved in tensile strength by manganese, phosphorus and chromium dispersed in the iron base, as compared with a conventional cast iron, the improvement in maturity can also be achieved.

In the recycling method of scrap steel plate of the present invention, the flake graphite cast iron can be produced by the addition of sulfur, and rare-earth metal or misch metal and, further, the spheroidal graphite cast iron can be produced by adding spheroidizing agent after the addition of rare-earth metal or misch metal.

In detail, when the hot metal contains not less than 0.7 weight% manganese, the cast iron obtained therefrom usually reduces in elongation significantly. However, when a complex sulfide comprising manganese, and rare earth metal or misch metal is formed in the preparing process, first, the influence of manganese can be suppressed. Thereafter, when the spheroidizing agent is added to it, the production of complex sulfide comprising the added spheroidizing agent, and rare earth metal or misch metal can be suppressed effectively, as compared with the process of adding the spheroidizing agent before or at the same time as the addition of rare-earth metal or misch metal to produce spheroidal graphite cast iron. As a result of this, the spheroidal graphite cast iron of large in elongation and excellent in mechanical strength can be produced efficiently.

Further, it is preferable that when spheroidizing agent is added to the hot metal, the spheroidizing agent added to the hot metal comprises no rare-earth metal but comprises bismuth.

When spheroidizing agent comprises bismuth, the spheroidal graphite can be granulated finely, and as such can provide further enhanced mechanical strengths such as fatigue strength, tensile strength and elongation. The spheroidizing agent usually comprises rare-earth elements. As compared with the spheroidal graphite cast iron produced by mixing bismuth in the spheroidizing agent comprising these rare-earth elements and then adding the spheroidizing agent comprising rare-earth element and bismuth, the spheroidal graphite cast iron produced by adding spheroidizing agent comprising no rare-earth element but comprising bismuth can be granulated efficiently, thus providing further enhanced mechanical strengths.

### Brief Description of the Drawings

FIG. 1 is a graph showing a relation between manganese content and chill depth of flake graphite cast iron of Example and that of Comparative Example,
FIG. 2 is a graph showing a relation between manganese content and elongation of spheroidal graphite cast iron,
FIG. 3 is an image-processed photomicrograph of a constitution of the flake graphite cast iron obtained from hot metal comprising 0.02 to 0.2 weight% sulfur, and a content of rare earth metal or misch metal added to be two times as much as the content of sulfur,
FIG. 4 is an image-processed photomicrograph of a constitution of the spheroidal graphite cast iron obtained when a spheroidizing agent of Fe-Mg-Si-Ca-RE is simultaneously added with rare earth metal or misch metal,
FIG. 5 is an image-processed photomicrograph of a constitution of the spheroidal graphite cast iron obtained when the spheroidizing agent of Fe-Mg-Si-Ca-RE is added after the addition of the rare earth metal or misch metal,
FIG. 6 is an image-processed photomicrograph of a constitution of the spheroidal graphite cast iron obtained when a spheroidizing agent of Fe-Mg-Si-Ca-RE-Bi is added, and
FIG. 7 is an image-processed photomicrograph of a constitution of the spheroidal graphite cast iron obtained when a spheroidizing agent of Fe-Mg-Si-Ca-Bi is added.

### Best Mode for Carrying out the Invention

In the recycling method of scrap steel plate of the present invention, scraps of high-tensile steel plates are collected together with scraps of ordinary steel plates in a batch collecting process, first.

The scraps of high-tensile steel plates collected are scrap steel plates left over after the pressing of the high-tensile steel plate (high-tensile plate), including, for example, scrap steel plates left over after the pressing of a shell body and a shell plate of an automobile employing high-tensile steel plates.

The high-tensile steel plate is made of alloyed steel which is increased in strength by addition of chromium and other material and usually has a tensile strength of 340MPa or more, containing impurities such as manganese and phosphorous. For example, this high-tensile steel plate comprises usually 0.5 to 2.0 weight% manganese, usually 0.02 to 0.1 weight% phosphorous, and usually 0.05 to 1.0 weight% chromium.

The scraps of ordinary steel plates collected are scrap steel plates made in the pressing of the ordinary steel plate (mild steel plate), including, for example, scrap steel plates made in the pressing of a shell body and a shell plate of an automobile employing ordinary steel plates.

The ordinary steel plate is made of carbon steel other than special steel such as alloyed steel and comprises usually not more than 0.5 weight% manganese, usually not more than 0.02 weight% phosphorous, and usually not more than 0.1 weight% chromium.

In the batch collecting process, the scraps of high-tensile steel plates are collected together with the scraps of ordinary steel plates. The scraps of high-tensile steel plates and the scraps of ordinary steel plates can be collected in the mixed state without being separated from each other, though the batch collecting process is not particularly limited thereto.

This batch collecting process can eliminate the need of the specific facilities and tasks for separation and collection of the scraps of high-tensile steel plates and the scraps of ordinary steel plates, thus achieving cost saving and improvement of workability.

Then, in the present invention, the scrap steel plates thus collected are melted to be converted into hot metal in the preparing process. If not less than 0.7 weight% manganese is contained in the hot metal obtained, then the hot metal is prepared according to the invention so that a sulfur content is in the range of 0.02 to 0.2 weight% in the hot metal and a rare earth metal or a misch metal which is two times as much as the sulfur content is added to the hot metal.

Melting the scrap steel plates by use of a heating furnace is simply required for converting the collected scrap steel plates (in which the scraps of high-tensile steel plates and the scraps of ordinary steel plates are mixed up) into the hot metal. Thus, the hot metal of the scrap steel plates can be obtained easily. In the melting process, a heating furnace that employs cokes as fuel (e.g. a cupola furnace) may be used. In this case, sulfur components of the cokes are melted in the hot metal.

In the present invention, not less than 0.7 weight% manganese is contained in the hot metal obtained, and the hot metal is prepared so that a sulfur content is in the range of 0.02 to 0.2 weight% in the hot metal, and a rare earth metal or a misch metal which is two times as much as the sulfur content is added to the hot metal.

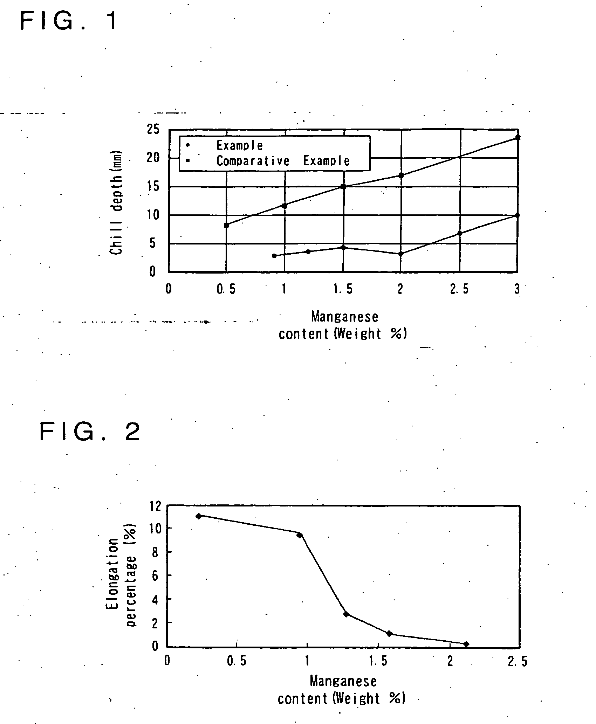

If not less than 0.7 weight% manganese is contained in the hot metal of the collected scrap steel plates, then a depth of chill (depth to which the chill constitution is produced) exceeds 10mm when the hot metal is solidified, as the cast iron of Comparative Example shown in FIG. 1 (i.e., the flake graphite cast iron obtained from the hot metal which is not prepared so that a sulfur content is in the range of 0.02 to 0.2 weight% in the hot metal, and a rare earth metal or a misch metal which is two times as much as the sulfur content is not added to the hot metal) and the cast iron obtained reduces both in easiness for casting and in machinability and mechanical nature. As a result, the cast iron obtained cannot be used for structural parts.

This is why when not less than 0.7 weight% manganese is contained in the hot metal, hot metal is prepared so that a sulfur content is in the range of 0.02 to 0.2 weight% in the hot metal, and a rare earth metal or a misch metal which is two times as much as the sulfur content is added to the hot metal.

When a manganese content is less than 0.7 weight%, the depth of chill at the solidification of the hot metal (depth to which the chilled constitution is produced) does not exceed 10mm even in the cast iron of Comparative Example shown in FIG. 1 and the cast iron obtained does not reduce in easiness for casting and in machinability and mechanical nature substantially. As a result, the cast iron obtained can be used for structural parts practically.

For obtaining a sulfur content in the range of 0.02 to 0.2 weight%, the sulfur is added into the hot metal so that a sulfur content of 0.02-0.2 weight% can be obtained. When a content of sulfur existing as impurities in the hot metal is already in the range of 0.02 to 0.2 weight% due to the sulfur components in the cokes being melted in the hot metal, the sulfur need not be added to the hot metal positively.

The rare-earth metals that may be used include metals comprising rare-earth elements, such as cerium and lanthanum. Also, the misch metals that may be used include mixture of rare-earth elements, such as a mixture comprising cerium as a main component, lanthanum, neodymium, praseodymium, etc..

Then, the rare earth metal or the misch metal which is two times as much as the sulfur content, i.e., in the range of 0.04 to 0.4 weight% is added to the hot metal.

As a result of this, a complex sulfide comprising manganese, and rare earth metal or misch metal is produced. The complex sulfide serves as an effective base for crystallization of graphite, promoting the crystallization of graphite and thus suppressing the chilling at the solidification of the hot metal.

It is common in the batch recycling process that as a mixing proportion of the scrap of high-tensile steel plate to the scrap of ordinary steel plate increases, a manganese content increases. It is seen from in FIG. 1 for example that in the cast iron of Comparative Example, as the manganese content increases, the chill depth increases. On the other hand, in the cast iron of Example formed from the hot metal to which the rare earth metal or the misch metal is added two times as much as 0.02 to 0.2 weight% sulfur in the preparation process, even when the manganese content increases, the chill depth is efficiently suppressed from increasing.

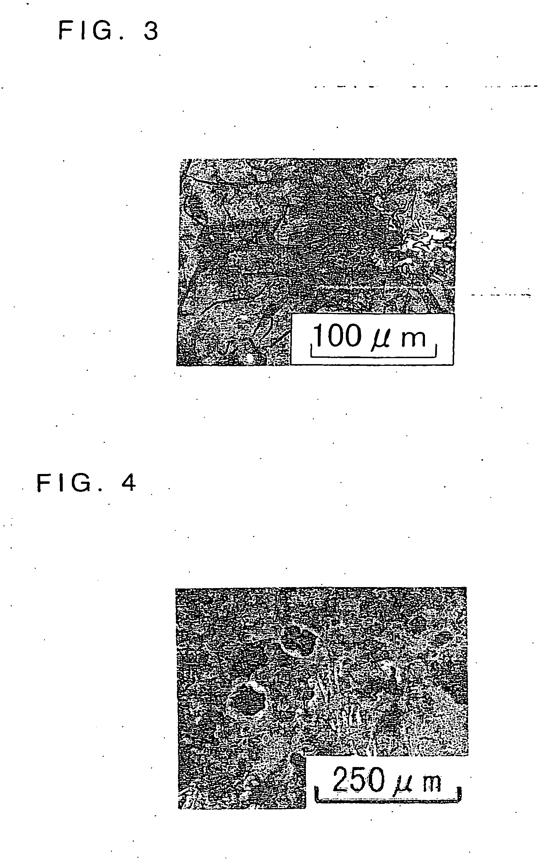

When the hot metal thus prepared is solidified, the cast iron excellent in easiness for casting and in machinability and mechanical nature and suitably useable for structural parts can be produced at low cost without adding any high-purity pig iron (For example FIG. 3 shows a constitution of a flake graphite cast iron produced in this manner). Also, since the cast iron thus produced is improved in tensile strength by manganese, phosphorus and chromium dispersed in the iron base, as compared with a conventional cast iron, the improvement in maturity can also be achieved.

Also, in the present invention, after the rare earth metal or the misch metal which is two times as much as the sulfur content is added in the preparing process, a spheroidizing agent may be added further so that a spheroidal graphite cast iron can be produced by using the scraps of high-tensile steel plates as raw material.

The spheroidizing agent usually comprises an alloy containing magnesium in the range of 3 to 8 weight% and generally has a composition comprising Fe-Mg-Si-RE (rare-earth element). It may further comprise calsium to promote spheroidicity of cast iron by the action of deacidification and desulfurization and suppress the vapor reaction of magnesium. Thus, by using the spheroidizing agent of the composition comprising Fe-Mg-Si-Ca-RE, the spheroidal graphite cast iron can be produced further effectively.

An amount of spheroidizing agent added is in the range of about 0.5 to about 2.0 weight% to a total amount of hot metal.

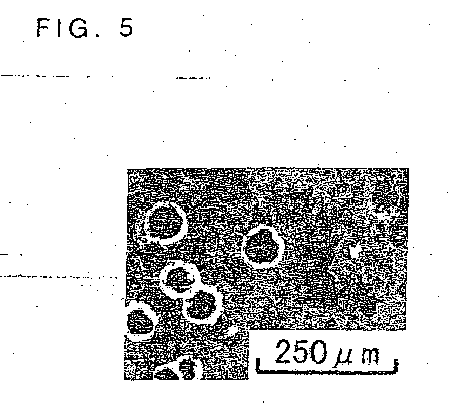

When the hot metal contains not less than 0.7 weight% manganese, the cast iron obtained therefrom significantly reduces in elongation, as shown in FIG. 2. However, when a complex sulfide comprising manganese, and rare earth metal or misch metal is formed in the preparing process, first, the influence of manganese can be suppressed. Thereafter, when the spheroidizing agent is added to it, the production of complex sulfide comprising the added spheroidizing agent, and rare earth metal or misch metal can be suppressed effectively, as compared with the process of adding the spheroidizing agent before or at the same time as the addition of rare-earth metal or misch metal to produce spheroidal graphite cast iron (For example FIG. 4 shows a constitution of a spheroidal graphite cast iron produced by the process of simultaneously adding the spheroidizing agent of Fe-Mg-Si-Ca-RE together with rare-earth metal or misch metal). As a result of this, the spheroidal graphite cast iron of large in elongation and excellent in mechanical strengths can be produced efficiently (For example FIG. 5 shows a constitution of a spheroidal graphite cast iron produced by the process of adding the spheroidizing agent of Fe-Mg-Si-Ca-RE after the addition of rare-earth metal or misch metal).

The spheroidizing agent should preferably be added within fifteen minutes after the addition of rare-earth metal or misch metal. When the spheroidizing agent is added at a later time than that, there is a possibility that the effects mentioned above may not be provided.

Further, in the present invention, rather than the general spheroidizing agent mentioned above, the spheroidizing agent comprising no rare-earth element but comprising bismuth is preferably added.

This spheroidizing agent can be obtained, for example, by alloying bismuth in the spheroidizing agent comprising no RE. For example, a granulating agent having a composition comprising Fe-Mg-Si-Bi, Fe-Mg-Si-Ca-Bi, or the like may be used.

To be more specific, the granulating agent is prepared in the form of an alloy of a composition comprising 3.0-10.0weight% magnesium, 43-70weight% silicon, 1.0-4.0weight% calcium, if necessary, 0.1-2.0weight% bismuth, and the remaining iron.

In addition, an amount of the spheroidizing agent added which comprises no rare-earth element but comprises bismuth is also in the range of about 0.5wight% to about 2.0weight% to a total amount of the hot metal, as in the case of the spheroidizing agent mentioned above.

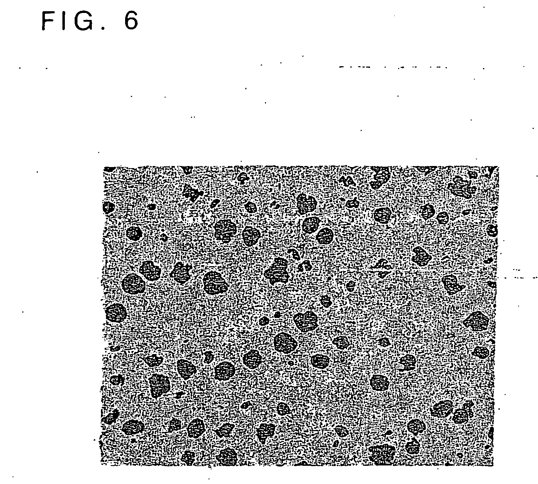

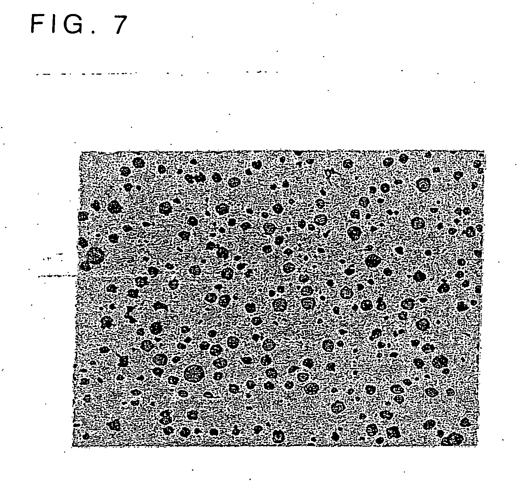

The spheroidizing agent generally comprises rare-earth element, as mentioned above. As compared with the spheroidal graphite cast iron produced by the process of mixing bismuth in the spheroidizing agent comprising the rare-earth element and then adding the spheroidizing agent comprising rare-earth element and bismuth (For example FIG. 6 shows a constitution of a spheroidal graphite cast iron produced by the process of adding spheroidizing agent of Fe-Mg-Si-Ca-RE-Bi), the spheroidal graphite cast iron produced by the process of adding spheroidizing agent comprising no rare-earth element but comprising bismuth (For example FIG. 7 shows as constitution of a spheroidal graphite cast iron produced by the process of adding spheroidizing agent of Fe-Mg-Si-Ca-Bi) can achieve the granulation of the spheroidal graphite cast iron further efficiently, thus providing further enhanced mechanical strengths.

### Industrial Applicability

The method of recycling scrap steel plate of the present invention that can collect scrap steel plates including scraps of high-tensile steel plate in a batch process to produce good quality of cast iron easily, while avoiding unnecessary cost increase, is effective for recycling the scrap steel plates.

## Claims

1. A recycling method of scrap steel plate comprising:
a batch collecting process of collecting together scrap of high-tensile steel plate and scrap of ordinary steel plate,
melting the scrap steel plates collected, the hot metal containing not less than 0.7 weight% manganese, and
preparing the hot metal so that the sulfur content is in the range of 0.02 to 0.2 weight% in the hot metal and adding rare earth metal or misch metal which is two times as much as the sulfur content to the hot metal.

2. The recycling method of scrap steel plate according to Claim 1, wherein after the addition of the rare earth metal or misch metal, spheroidizing agent is added to the hot metal.

3. The recycling method of scrap steel plate according to Claim 2, wherein the spheroidizing agent comprises no rare-earth element but comprises bismuth.

## Patentansprüche

1. Recyclingverfahren für Stahlblechschrott, umfassend
ein diskontinuierliches Sammelverfahren, bei dem Schrott von hochfestem Stahlblech und Schrott von normalem Stahlblech gesammelt wird,
Schmelzen des gesammelten Stahlblechschrotts, wobei das heiße Metall nicht weniger als 0,7 Gew.-% Mangan enthält, und
Herstellen des heißen Metalls derart, dass der Schwefelgehalt im Bereich von 0,02 bis 0,2 Gew.-% im heißen Metall beträgt, und Zugeben von Seltenerdmetall oder Mischmetall, dessen Menge das Doppelte des Schwefelgehaltes zum heißen Metall beträgt.

2. Recyclingverfahren für Stahlblechschrott nach Anspruch 1, bei dem nach der Zugabe des Seltenerdmetalls oder Mischmetalls ein sphäroisierendes Mittel zum heißen Metall gegeben wird.

3. Recyclingverfahren für Stahlblechschrott nach Anspruch 2, bei dem das sphäroisierende Mittel kein Seltenerdelement, sondern Wismut umfasst.

## Revendications

1. Procédé de recyclage de tôle d'acier de ferraille comprenant :
un processus de collecte par lots consistant à collecter conjointement de la ferraille de tôle d'acier à haute résistance à la traction et de la ferraille de tôle d'acier ordinaire,
la fusion des tôles d'acier de ferraille collectées, le métal chaud contenant pas moins de 0,7 % en poids de manganèse, et
la préparation du métal chaud de sorte que la teneur en soufre soit dans la plage de 0,02 à 0,2 % en poids dans le métal chaud et l'ajout au métal chaud de métal des terres rares ou de mischmétal qui représente deux fois la teneur en soufre.

2. Procédé de recyclage de tôle d'acier de ferraille selon la revendication 1, dans lequel après l'ajout de métal des terres rares ou de mischmétal, un agent de sphéroïdisation est ajouté au métal chaud.

3. Procédé de recyclage de tôle d'acier de ferraille selon la revendication 2, dans lequel l'agent de sphéroïdisation ne comprend aucun élément des terres rares mais comprend du bismuth.
